# FASCICULE DE BREVET EUROPEEN

(11) **EP 3 431 269 B1**
(45) Date de publication et mention de la délivrance du brevet: **30.08.2023**
(21) Numéro de dépôt: 18181982.2
(22) Date de dépôt: 05.07.2018
(51) Int. Cl.: B29C 65/50, B29C 65/78, B65H 19/18, B65H 21/00, C09J 7/00

(54) **DISPOSITIF DE RACCORDEMENT DE GAINES PAR ENCOLLAGE INTERNE ET PROCÉDÉ DE RACCORDEMENT CORRESPONDANT**
VORRICHTUNG ZUM VERBINDEN VON SCHLÄUCHEN DURCH INNENVERKLEBUNG UND ENTSPRECHENDES VERBINDUNGSVERFAHREN
DEVICE FOR CONNECTING SLEEVES BY INTERNAL GLUING AND CORRESPONDING CONNECTING METHOD

(30) Priorité: 18.07.2017 FR 1756808
(43) Date de publication de la demande: 23.01.2019
(73) Titulaire: SLEEVER INTERNATIONAL COMPANY, F-91420 Morangis (FR)
(72) Inventeur: FRESNEL, Eric, 75014 Paris (FR)
(74) Mandataire: Decorchemont, Audrey Véronique Christèle

(56) Documents cités:
- WO-A1-2017/025218

## Description

L'invention concerne un dispositif de raccordement de deux gaines tubulaires aplaties par encollage de l'intérieur de l'extrémité de l'une des deux gaines.

L'invention concerne également un procédé de raccordement correspondant.

### ARRIERE-PLAN TECHNOLOGIQUE DE L'INVENTION

Dans le domaine de la pose de manchons sur des objets en défilement, comme des manchons thermorétractable, les manchons sont en général obtenus par le tronçonnage d'une gaine tubulaire qui est conditionnée dans un état aplati sous forme de bobine puis ouverte par un conformateur avant son découpage transversal.

Compte tenu des cadences des machines de pose de manchons sur des objets en défilement, se pose répétitivement le problème du changement de bobine lorsqu'une bobine est entièrement consommée.

Dans des techniques relativement anciennes, le raccordement des deux bobines se faisait manuellement.

Ceci n'est cependant plus guère envisageable avec des cadences très élevées des machines de pose de manchons sur des objets en défilement.

On a plus récemment cherché à automatiser le processus de raccordement de gaine.

On a ainsi proposé de raccorder extérieurement les deux extrémités de deux gaines tubulaires aplaties en agençant les deux extrémités de sorte que les bords libres des deux extrémités de gaine soient en vis-à-vis et accolés, sans toutefois se recouvrir, et en appliquant un élément adhésif de part et d'autre desdites extrémités de gaine pour en réaliser la jonction.

On pourra à ce titre se référer au brevet FR 2 880 329 de la présente demanderesse décrivant un tel procédé.

On peut également se référer au brevet EP 2 825 370 de la société Fuji Seal International proposant aussi un raccordement extérieur de deux extrémités de deux gaines tubulaires aplaties. La machine décrite dans ce brevet permet par une succession complexe de nombreux mouvements d'agencer l'extrémité de l'une des gaines relativement à l'extrémité de l'autre des gaines avant que les deux gaines ne soient raccordées extérieurement par de l'adhésif.

La demande WO 2017/025218 propose également un dispositif de raccordement de gaines par encollage extérieur de l'une des gaines.

### OBJET DE L'INVENTION

L'invention vise à proposer un dispositif de raccordement de gaines facilitant le raccordement entre lesdites gaines. L'invention vise également un procédé de raccordement correspondant.

### PRESENTATION DE L'INVENTION

En vue de la réalisation de ce but, on propose un dispositif de raccordement de deux gaines tubulaires aplaties comportant :
- un bloqueur d'une extrémité d'une première gaine, le bloqueur comprenant des moyens d'ouverture d'une extrémité de la première gaine,
- un système d'encollage pour encoller l'intérieur de l'extrémité ouverte de la première gaine, le bloqueur étant agencé pour autoriser une fermeture de l'extrémité de la première gaine, une fois celle-ci encollée, sur une extrémité de la deuxième gaine.

Ainsi, le raccordement entre les deux gaines est assuré par encollage de l'intérieur de l'extrémité de l'une des deux gaines qui est ensuite refermée sur l'extrémité de l'autre gaine.

Le raccordement peut donc se faire rapidement et relativement facilement puisqu'il n'est pas nécessaire d'accoler de manière aussi précise que dans l'art antérieur les deux extrémités de des deux gaines.

De manière particulière, le système d'encollage comporte un distributeur d'adhésif.

De manière particulière, le dispositif comporte un bâti, le bloqueur étant agencé sur le bâti.

De manière particulière, le dispositif comporte un chariot de déplacement d'une extrémité de la deuxième gaine relativement à la première gaine.

De manière particulière, le chariot comporte une base destinée à supporter la deuxième gaine, la base étant agencée dans le dispositif de sorte à être mobile en translation relativement à un bâti du dispositif selon un seul mouvement de translation.

De manière particulière, le chariot porte le système d'encollage pour encoller l'extrémité de la première gaine.

De manière particulière, le chariot comporte deux systèmes d'encollage agencés à des extrémités opposées du chariot.

De manière particulière, le chariot comporte une extension portant un galet d'entraînement motorisé, le chariot est ainsi agencé de sorte que lorsque le chariot est au niveau de l'un des bloqueurs, le galet d'entraînement se situe au niveau de la bobine formée par la gaine pour pouvoir entraîner en rotation directement la bobine ou un élément lié en rotation à la bobine.

De manière particulière, le chariot comporte des moyens de préparation de l'extrémité de la deuxième gaine.

De manière particulière, les moyens de préparation de l'extrémité de la deuxième gaine comportent un organe de coupe de l'extrémité de la deuxième gaine.

De manière particulière, les moyens de préparation de l'extrémité de la deuxième gaine comportent une baguette montée mobile sur le chariot entre une position abaissée dans laquelle la baguette s'étend sensiblement dans le prolongement du reste du chariot et une position relevée dans laquelle la deuxième baguette s'étend transversalement en direction du plafond du dispositif.

De manière particulière, la baguette est conformée en une barre aspirante.

De manière particulière, les moyens d'ouverture comportent deux barres aspirantes agencées l'une au-dessus de l'autre et entre lesquelles est destinée à être insérée l'extrémité de la première gaine.

De manière particulière, les deux barres aspirantes sont chacune montée mobile relativement à un bâti du dispositif entre :
- une position de rabattement dans laquelle les deux barres sont agencées de sorte que des trous d'aspiration d'une des barres soient en regard des trous d'aspiration de l'autre des barres,
- une position de blocage dans laquelle les deux barres sont agencées de sorte que les trous d'aspiration des deux barres soient orientés vers l'extérieur du bloqueur.

De manière particulière, au moins l'une des barres est en outre montée mobile relativement au bâti selon un mouvement supplémentaire afin d'être mobile entre :
- une position d'écartement dans laquelle ladite barre est décalée de l'autre barre, et
- la position d'attente dans laquelle les deux barres aspirantes sont posées l'une contre l'autre.

De manière particulière, le dispositif comporte en outre un appareil de coupe pour préparer l'extrémité de la première gaine, l'appareil de coupe comportant des moyens d'encliquetage aptes à coopérer avec des moyens d'encliquetage correspondant d'un bâti du dispositif.

De manière particulière, l'appareil de coupe comporte une fente et une lame mobile relativement à ladite fente, la fente étant ménagée de sorte à présenter une portion centrale rectiligne prolongée à ces deux extrémités par des décrochements symétriques.

De manière particulière, un bâti du dispositif comporte un magasin de stockage de bobines, le magasin comportant des tiroirs montés coulissants relativement au bâti et portant chacun une bobine.

On propose également un rouleau d'adhésif comportant une bande support et un adhésif double face porté par la bande support, l'adhésif étant prédécoupé à intervalles réguliers sur la longueur du rouleau d'adhésif.

De manière particulière, la bande support comporte une zone centrale sans adhésif et deux zones frontalières recouvertes de l'adhésif double face et entourant ladite zone centrale.

De manière particulière, l'adhésif comporte une succession de marqueurs agencés à intervalles réguliers sur la longueur du rouleau d'adhésif pour la détection d'un raccordement des deux gaines tubulaires aplaties.

De manière particulière, les marqueurs sont des éléments en matière métallique.

L'invention concerne également un procédé de raccordement de deux gaines tubulaires aplaties comportant les étapes successives suivantes :
- bloquer une extrémité d'une première gaine,
- ouvrir l'extrémité de la première gaine,
- encoller l'intérieur de l'extrémité de la première gaine,
- refermer l'extrémité de la première gaine sur une extrémité de la deuxième gaine.

D'autres caractéristiques et avantages de l'invention ressortiront à la lecture de la description qui suit d'un mode de réalisation particulier non limitatif de l'invention.

### DESCRIPTION DES FIGURES

L'invention sera mieux comprise à la lumière de la description qui suit en référence aux figures des dessins annexés parmi lesquelles :
- la figure 1 illustre schématiquement une installation de pose de manchons sur des objets en défilement comprenant un dispositif de raccordement selon un mode de réalisation particulier de l'invention,
- la figure 2 est une vue en trois dimensions du dispositif de raccordement de l'installation schématisée à la figure 1,
- la figure 3 est une vue agrandie d'une partie du bâti du dispositif illustré à la figure 2 avec en particulier les bloqueurs dudit dispositif,
- la figure 4 est une vue agrandie d'une partie du dispositif illustré à la figure 2 comprenant en particulier le chariot dudit dispositif,
- la figure 5 est une vue en trois dimensions du chariot du dispositif illustré à la figure 2, seule une partie d'un deuxième système d'encollage du chariot étant ici visible,
- la figure 6 est une vue en trois dimensions d'un appareil de coupe des extrémités des gaines agencées dans le dispositif illustré à la figure 2,
- la figure 7 est une vue schématique d'une extrémité de gaine après découpe par l'appareil de coupe illustré à la figure 6,
- la figure 8 est une vue schématique d'une portion d'un rouleau d'adhésif utilisé dans le dispositif illustré à la figure 2,
- les figures 9a à 9i illustrent schématiquement les différentes étapes de raccordement de deux gaines à l'aide du dispositif illustré à la figure 2.

### DESCRIPTION DETAILLEE D'UN MODE DE REALISATION PARTICULIER

### DE L'INVENTION

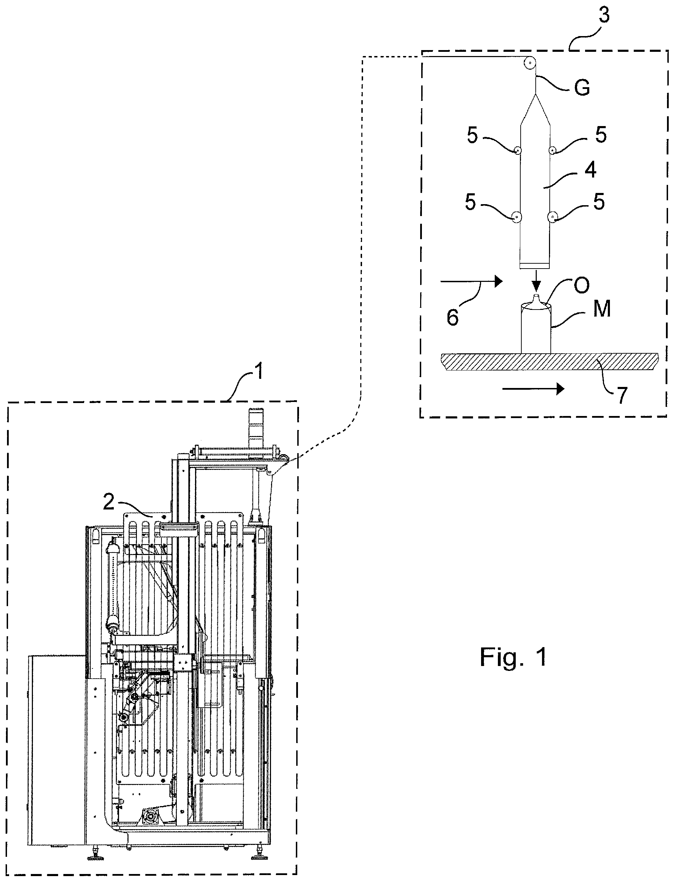

En référence à la figure 1, l'installation de pose de manchons sur des objets en défilement comporte un dispositif de raccordement de gaines tubulaires aplaties selon un mode de réalisation particulier de l'invention, généralement désigné par 1 et une machine 3 de préparation et découpe de gaines pour former des manchons M déposés ensuite sur des objets O en défilement, ladite machine 3 étant en aval du dispositif. Les gaines sont typiquement en matériau thermo-rétractable.

La machine 3 comporte un conformateur 4, qui a typiquement la forme d'une torpille d'axe vertical, dont le maintien est assuré par des paires de galets en regard 5 dont certains sont motorisés.

La gaine G qui a défilé depuis le dispositif 1 jusqu'au conformateur 4 dans sa forme tubulaire aplatie, s'ouvre progressivement en arrivant en haut du conformateur 4. Puis la gaine G passe entre le conformateur et les galets 5, le conformateur 4 restant ainsi suspendu dans le vide au fur et à mesure du défilement contre sa paroi de la gaine G à présent ouverte en cylindre.

Immédiatement en aval du conformateur 4, la gaine G subit une opération de coupe au moyen d'un outil de coupe schématisé ici par la flèche 6, ce qui produit des manchons M qui sont ainsi directement posés sur les objets O disposés sur un tapis en défilement 7 en-dessous du conformateur 4.

La machine 3 et la liaison entre le dispositif 1 et la machine 3 étant bien connus, ils ne seront pas davantage détaillés ici.

On va maintenant s'intéresser au dispositif 1 et à la question du raccordement entre les gaines qui se pose chaque fois qu'une bobine en cours de dévidement arrive à sa fin, les gaines étant ici conditionnées sous forme de bobines.

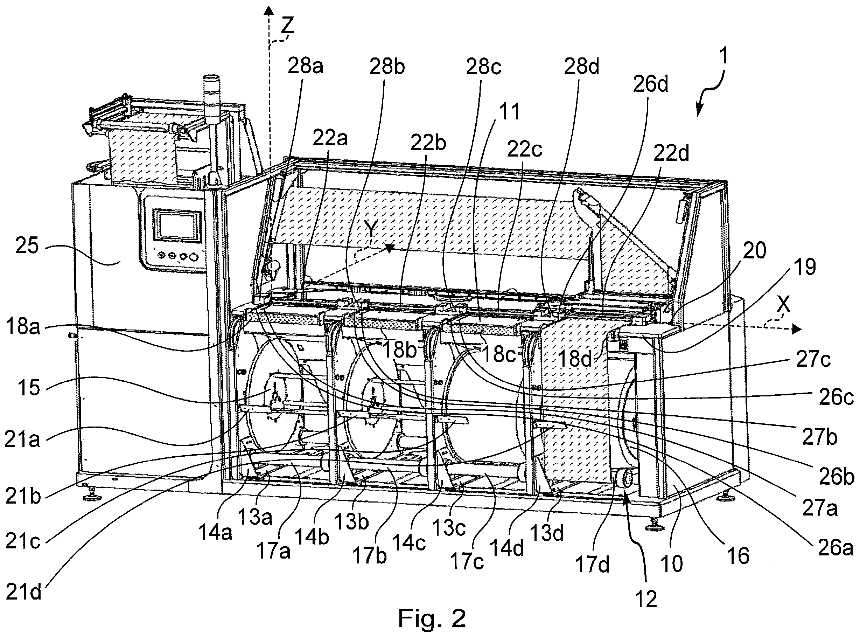

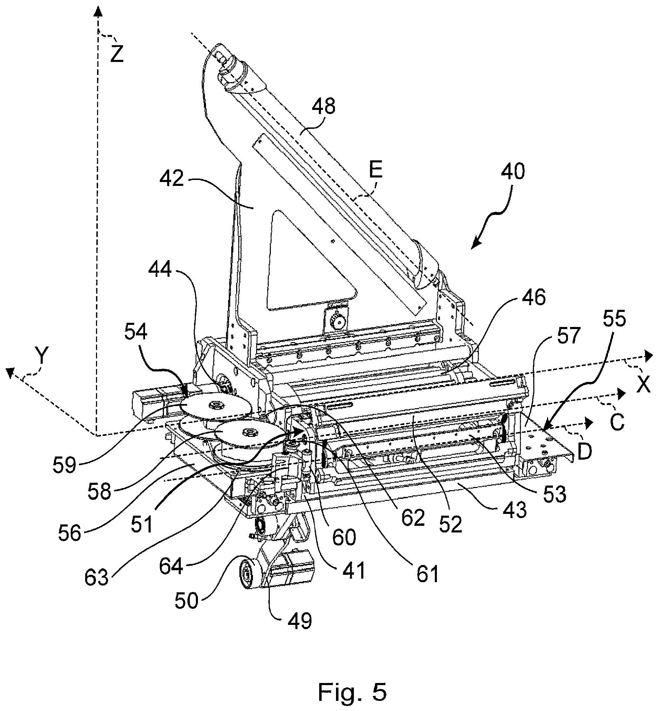

Ainsi, en référence aux figures 2 à 8, le dispositif 1 comporte un bâti 10 s'étendant longitudinalement selon un premier axe X. Le bâti 10 comporte une table de raccordement 11 s'étendant dans un plan comprenant le premier axe X et un deuxième axe Y transversal qui est perpendiculaire au premier axe X. Le bâti 10 est conformé de sorte que ledit plan s'étende sensiblement parallèlement au sol sur lequel repose le bâti. Le bâti 10 a donc une hauteur définie selon un troisième axe Z sensiblement vertical, perpendiculaire au premier axe X et au deuxième axe Y.

Le bâti 10 comporte un magasin 12 de stockage de bobines qui est agencé sous la table de raccordement 11. Par exemple le magasin 12 est conformé de sorte à supporter quatre bobines. Cet exemple n'est bien entendu pas limitatif et le magasin 12 pourra être conformé pour supporter un nombre différent de bobines.

De façon particulière, le magasin 12 est conformé de sorte à présenter quatre compartiments 13a, 13b, 13c, 13d accueillant chacun respectivement une bobine. Les compartiments 13a, 13b, 13c, 13d sont juxtaposés et s'étendent ainsi les uns à la suite des autres selon le premier axe X.

De préférence, chaque compartiment 13a, 13b, 13c, 13d comporte un tiroir 14a, 14b, 14c, 14d monté coulissant dans le compartiment associé et portant la bobine associée. Chaque tiroir 14a, 14b, 14c, 14d est par exemple monté coulissant dans le compartiment associé selon un axe de coulissement parallèle au deuxième axe Y.

De la sorte, il s'avère plus aisé pour un opérateur de recharger le magasin 12.

Chaque tiroir 14a, 14b, 14c, 14d comporte typiquement une goulotte 15 (dont une seule est référencée ici) sur laquelle on vient monter chaque bobine pour le déroulement de la bobine autour de l'axe de ladite goulotte. Les goulottes du magasin 12 sont agencées de sorte que leur axe s'étende parallèlement au premier axe X.

De la sorte, les différentes bobines se retrouvent agencées dans le magasin 12 les unes à la suite des autres le long du premier axe X et de sorte à se dévider autour des axes des goulottes parallèles audit premier axe X.

Afin de limiter un déplacement parasite de chaque bobine le long de l'axe de la goulotte associée, chaque tiroir 14a, 14b, 14c, 14d comporte un disque 16 (dont un seul est référencé ici) agencé sur la goulotte correspondante une fois la bobine en place sur la goulotte, le disque 16 étant fixe en translation le long de l'axe de la goulotte relativement à la goulotte.

Le bâti 10 comporte par ailleurs des rouleaux de renvois associés à chacun des compartiments 13a, 13b, 13c, 13d pour amener chaque bobine depuis son compartiment jusqu'à la table de raccordement 11.

Selon un mode de réalisation particulier, pour chaque compartiment 13a, 13b, 13c, 13d, un premier rouleau (non visible ici) est agencé en partie basse du compartiment, au fond du compartiment, un deuxième rouleau 17a, 17b, 17c, 17d est agencé en partie basse du compartiment, respectivement 13a, 13b, 13c, 13d, et en extrémité dudit compartiment et un troisième rouleau 18a, 18b, 18c, 18d est agencé en partie haute du compartiment, respectivement 13a, 13b, 13c, 13d, et en extrémité dudit compartiment de manière à surplomber le deuxième rouleau 17a, 17b, 17c, 17d et à être sensiblement au niveau de la frontière avec un premier bord longitudinal 19 de la table de raccordement 11.

De la sorte, la gaine se dévide depuis la bobine jusqu'au premier rouleau puis se dévide depuis le premier rouleau jusqu'au deuxième rouleau (par exemple 17d) sensiblement horizontalement vers l'extérieur du compartiment (13d) et du dispositif 1, puis se dévide depuis le deuxième rouleau (17d) jusqu'au troisième rouleau (18d) pour remonter sensiblement verticalement jusqu'à la table de raccordement 11 puis s'étend du troisième rouleau (18d) jusqu'au deuxième bord longitudinal 20 de la table de raccordement 11 (opposé au premier bord longitudinal 19 précisé) sensiblement horizontalement et donc parallèlement à la table de raccordement 11.

De préférence, chaque compartiment 13a, 13b, 13c, 13d comporte un bras 21a, 21b, 21c, 21d portant un capteur de détection de la fin de la bobine associée (non visible ici). Le capteur détecte typiquement la présence d'un marqueur agencé sur la fin d'une bobine.

Ainsi, chaque bras 21a, 21b, 21c, 21d s'étend dans le compartiment associé parallèlement au premier axe X sensiblement au bord dudit compartiment pour être en regard de la gaine associée lors de sa remontée verticale entre le deuxième et le troisième rouleaux associés.

Par ailleurs, le bâti 10 comporte un bloqueur des extrémités initiales des différentes gaines présentes dans le magasin 12.

De préférence, le bâti 10 comporte autant de bloqueurs 22a, 22b, 22c, 22d qu'il y a de compartiments 13a, 13b, 13c, 13d dans le magasin 12 afin que chaque extrémité initiale de gaine soit bloquée par un bloqueur dédié.

Les différents bloqueurs 22a, 22b, 22c, 22d sont tous agencés ici au niveau du deuxième bord longitudinal 20 de la table de raccordement 11, là où arrivent les différentes extrémités initiales de gaines. Chaque bloqueur 22a, 22b, 22c, 22d s'étend ainsi en regard du troisième rouleau de renvoi 18a, 18b, 18c, 18d associé.

Chaque bloqueur 22a, 22b, 22c, 22d comporte des moyens d'ouverture de l'extrémité initiale de la gaine associée.

Les bloqueurs 22a, 22b, 22c, 22d étant tous identiques, seuls les moyens d'ouverture d'un seul d'entre eux vont à présent être décrits. La description s'applique bien entendu aux autres moyens d'ouverture.

Les moyens d'ouverture comportent ainsi deux barres aspirantes 23, 24. Chaque barre 23, 24 s'étend longitudinalement parallèlement au premier axe X, les deux barres étant agencées l'une au-dessus de l'autre.

Les barres aspirantes 23, 24 sont par exemple reliées à une même pompe à vide (non représentée ici) du dispositif 1, la pompe à vide étant typiquement agencée en partie basse du bâti 10 derrière le magasin 12.

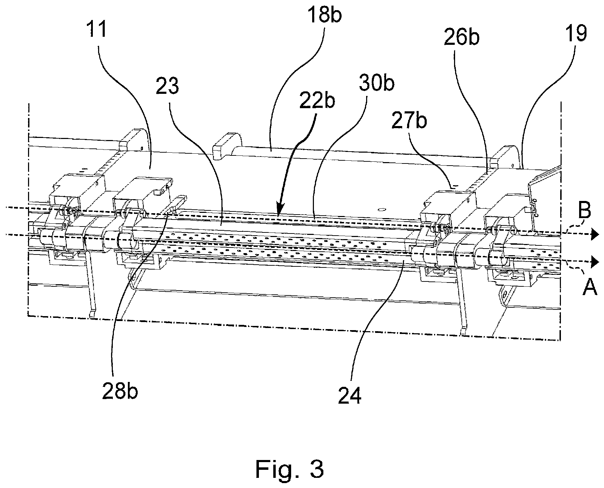

Les deux barres aspirantes 23, 24 desdits moyens d'ouverture sont ici chacune montée mobile sur la table de raccordement 11 entre :
- une position de rabattement dans laquelle les deux barres 23, 24 sont agencées de sorte que les trous d'aspiration d'une des barres soient en regard des trous d'aspiration de l'autre des barres,
- une position de blocage (comme illustrée à la figure 3) dans laquelle les deux barres 23, 24 sont agencées de sorte que les trous d'aspiration des deux barres 23, 24 soient orientés vers l'extérieur de la table de raccordement 11 (donc en direction opposée du premier bord longitudinal 19).

Les deux barres aspirantes 23, 24 sont typiquement montées pivotantes sur la table de raccordement 11 selon un axe de pivotement commun A qui est parallèle au premier axe X.

De façon particulière, la barre aspirante 23 supérieure est en outre montée mobile sur la table de raccordement 11 selon un mouvement supplémentaire afin d'être mobile entre :
- une position d'écartement dans laquelle la barre aspirante supérieure 23 est décalée de la barre aspirante inférieure 24 au moins selon une direction parallèle au troisième axe Z, et
- la position d'attente (dans laquelle les deux barres aspirantes 23, 24 sont posées l'une contre l'autre).

Ce mouvement supplémentaire est par exemple assuré par une rotation supplémentaire d'axe de pivotement B qui est parallèle au premier axe X, de la barre aspirante supérieure 23 sur la table de raccordement 11.

Typiquement, le mouvement de rotation autour de l'axe de pivotement A des deux barres aspirantes 23, 24 est motorisé et contrôlé automatiquement par le dispositif 1. En revanche, le mouvement de rotation supplémentaire de la barre aspirante supérieure 23 selon l'axe de pivotement B n'est pas motorisé : l'opérateur provoque lui-même le passage entre la position d'écartement et la position d'attente afin de faciliter l'insertion d'une extrémité initiale de gaine entre les deux barres aspirantes 23, 24 lors de la préparation d'une nouvelle bobine.

Le dispositif 1 comporte un organe de commande 25 des différents éléments du dispositif 1 comme par exemple les différents bloqueurs 22a, 22b, 22c, 22d. En particulier, ledit organe de commande 25 contrôle la motorisation des paires de barres aspirantes 23, 24 des différents bloqueurs 22a, 22b, 22c, 22d ainsi que l'alimentation par la pompe à vide des barres aspirantes 23, 24. Les capteurs de détection de fin de bobines sont aussi raccordés à l'organe de commande 25.

Selon un mode de réalisation préféré, le bâti 10 comporte des réglettes 26a, 26b, 26c, 26d. A chaque bloqueur 22a, 22b, 22c, 22d est associé une réglette 26a, 26b, 26c, 26d de sorte que chaque réglette 26a, 26b, 26c, 26d s'étende entre le bloqueur 22a, 22b, 22c, 22d et le troisième rouleau de renvoi 18a, 18b, 18c, 18d associé. Chaque réglette 26a, 26b, 26c, 26d s'étend ainsi sur la table de raccordement parallèlement au deuxième axe Y.

Ceci permet de venir accoler un des bords longitudinaux de la gaine à la réglette associée pour guider le déroulement de la gaine. De la sorte, la gaine est placée dans une position prédéterminée selon le deuxième axe Y ce qui permet de faciliter le raccordement avec l'ancienne gaine.

De préférence, chaque réglette 26a, 26b, 26c, 26d comporte des graduations métriques facilitant le positionnement de la gaine associée relativement au deuxième bord longitudinal 20 de la table de raccordement 11 .

De façon particulière, la table de raccordement 11 comporte également des graduations métriques 27a, 27b, 27c, 27d qui sont agencées sur la table de raccordement 11 ici le long de chaque réglette 26a, 26b, 26c, 26d afin de faciliter également le positionnement de la gaine associée respective relativement au deuxième bord longitudinal 20 de la table de raccordement 11.

Selon un mode de réalisation préféré, le dispositif 1 comporte un appareil de coupe 30 pour découper les extrémités initiales des nouvelles bobines de manière prédéterminée pour le raccordement.

De façon avantageuse, l'appareil de coupe 30 est conformé pour pouvoir être déplacé relativement à la table de raccordement 11 au niveau de chaque bloqueur 22a, 22b, 22c, 22d. A cet effet, le bâti 10 comporte au niveau de chaque bloqueur 22a, 22b, 22c, 22d, des moyens d'encliquetage 28a, 28b, 28c, 28d aptes à coopérer avec des moyens d'encliquetage 31 correspondants de l'appareil de coupe 30.

De la sorte, il suffit de décliqueter l'appareil de coupe 30 au niveau d'un bloqueur et de l'encliqueter au niveau d'un autre bloqueur pour découper une nouvelle extrémité initiale d'une gaine.

De manière avantageuse, en cas de changement de taille de gaine, il suffit d'associer un nouvel appareil de coupe au bâti 10 sans avoir à modifier tout le bâti 10.

De préférence, la table de raccordement 11 comporte au niveau des différents moyens d'encliquetage 28a, 28b, 28c, 28d du bâti 10 un tapis de protection 29a, 29b, 29c, 29d. Chaque tapis de protection 29a, 29b, 29c, 29d s'étend ainsi parallèlement au premier axe X sur la table de raccordement 11 au niveau des moyens d'encliquetage correspondants 28a, 28b, 28c, 28d. Chaque tapis de protection 29a, 29b, 29c, 29d est par exemple en matière caoutchouc.

Ainsi, lorsque l'appareil de coupe 30 est encliqueté sur l'un des bloqueurs, une face inférieure 33 de l'appareil de coupe 30 repose contre le tapis de protection associé au bloqueur, le tapis de protection associé protégeant ainsi la table de raccordement 11 d'une lame de l'appareil de coupe 30 lors d'une découpe d'extrémité initiale de gaine.

Par ailleurs, chaque tapis de protection 29a, 29b, 29c, 29d sert également avantageusement de repère pour faciliter le positionnement de la gaine relativement au deuxième bord longitudinal 20 de la table de raccordement 11.

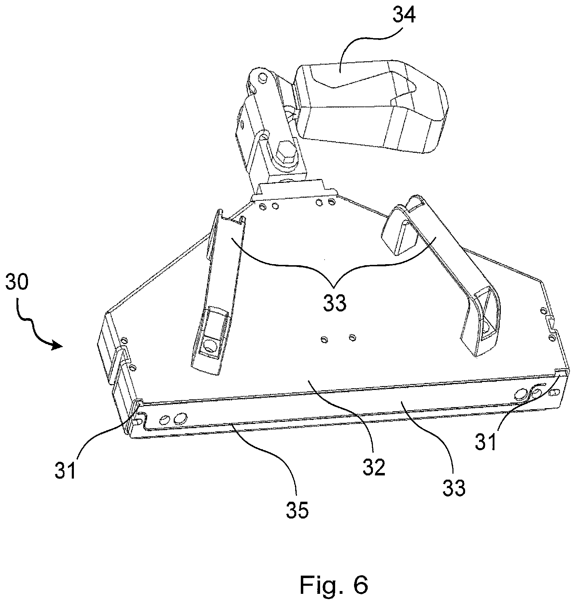

En référence à la figure 6, l'appareil de coupe 30 comporte plus précisément un corps 32 sensiblement plan et deux poignées de manipulation 33 du corps 32 pour faciliter le transport de l'appareil de coupe 30 et son attache temporaire aux différents moyens d'encliquetage 28a, 28b, 28c, 28d du bâti 10.

L'appareil de coupe 30 comporte par ailleurs une lame montée pour coulisser dans l'appareil de coupe 30 entre une position basse dans laquelle la lame dépasse d'une fente 35 ménagée dans la face inférieure 33 de l'appareil de coupe 30 et une position haute dans laquelle la lame ne dépasse pas de ladite fente 35.

L'appareil de coupe 30 comporte une poignée supplémentaire 34 d'actionnement manuel de la lame entre sa position haute et sa position basse pour la découpe de l'extrémité initiale des gaines.

Alternativement, la lame de l'appareil de coupe 30 peut être agencée de sorte que la poignée supplémentaire 34 provoque une translation de la lame le long de la fente 35 pour parcourir tout le chemin dessiné par la fente 35 en place du mouvement de haut en bas précité.

De façon particulière, la fente 35 de l'appareil de coupe 30 n'est pas totalement rectiligne. La fente 35 est ici ménagée de sorte à présenter une portion centrale rectiligne prolongée à ces deux extrémités par des décrochements symétriques sensiblement en forme de L.

Plus précisément chaque décrochement comporte successivement :
- une portion en arc de cercle convexe raccordée à la portion centrale,
- une portion rectiligne raccordée à la portion en arc de cercle convexe, la portion rectiligne étant sensiblement perpendiculaire à la portion centrale,
- une portion en arc de cercle concave raccordée à la portion rectiligne, et
- une portion rectiligne raccordée à la portion en arc de cercle concave, ladite portion rectiligne étant parallèle à la portion centrale et de longueur inférieure à celle de la portion centrale.

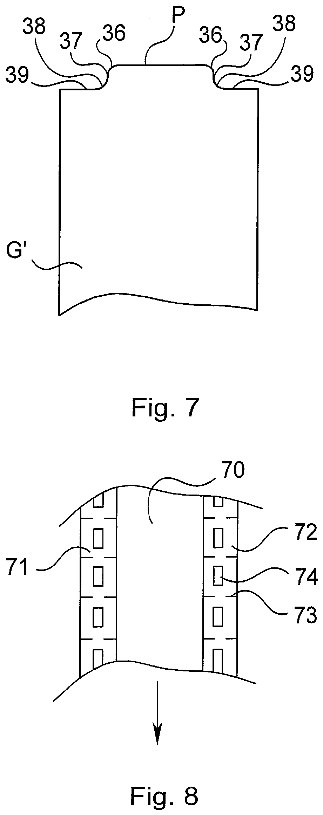

De la sorte, comme visible à la figure 7, l'extrémité initiale d'une gaine G' ainsi découpée n'est pas rectiligne mais présente deux retraits.

Plus précisément la fente 35 est conformée de sorte que chaque retrait comporte successivement :
- une portion en arc de cercle convexe 36 raccordée à la portion centrale P rectiligne de la gaine G',
- une portion rectiligne 37 raccordée à la portion en arc de cercle convexe 36, la portion rectiligne 37 étant sensiblement perpendiculaire à la portion centrale P,
- une portion en arc de cercle concave 38 raccordée à la portion rectiligne 37,
- une portion rectiligne 39 raccordée à la portion en arc de cercle concave 38, ladite portion rectiligne 39 étant parallèle à la portion centrale P et de longueur inférieure à celle de la portion centrale P.

Ladite extrémité initiale de la gaine comporte ainsi deux lèvres (s'étendant l'une sur l'autre de par la conformation en gaine aplatie) s'étendant dans le prolongement du reste de la gaine G' et se terminant par la portion centrale rectiligne P de la gaine G'.

La forme particulière de la découpe de l'extrémité initiale des gaines facilite le raccordement avec l'extrémité terminale de la bobine en train d'être dévidée comme nous le verrons par la suite.

De préférence, le dispositif 1 comporte un chariot 40 qui va permettre d'amener l'extrémité terminale de l'ancienne gaine en regard de l'extrémité initiale d'une nouvelle gaine.

Le chariot 40 est ici monté coulissant sur le bâti 10 selon le premier axe X en regard du deuxième bord longitudinal 20 de la table de raccordement 11. Le chariot 40 est ainsi agencé de sorte à pouvoir être amené au niveau de chaque bloqueur 22a, 22b, 22c, 22d du bâti 10. Le bâti 10 comporte par exemple des rails s'étendant parallèlement au premier axe X et à proximité immédiate du deuxième bord longitudinal 20, rails entre lesquelles le chariot 40 est monté coulissant selon le premier axe X.

L'organe de commande 25 est agencé pour commander également les différents éléments de chariot 40 ainsi que le mouvement de translation du chariot 40 selon le premier axe X.

Le chariot 40 va être à présent décrit.

Le chariot 40 comporte ainsi une base 41 comportant un premier bord longitudinal (non référencé ici) et un deuxième bord longitudinal 43, opposé au premier bord longitudinal, qui fait face au deuxième bord longitudinal 20 de la table de raccordement 11.

Le chariot 40 comporte par ailleurs un socle 42 s'étendant sensiblement à la perpendiculaire de la base 41 en direction du plafond du dispositif 1, au niveau du premier bord longitudinal de la base 41.

Le chariot 40 comporte typiquement un rouleau d'entraînement 44 de la gaine à dévider. Le rouleau d'entraînement 44 est ainsi motorisé et contrôlé par l'organe de commande 25.

Ledit rouleau d'entraînement 44 est monté sur la base 41 de sorte à s'étendre parallèlement au premier axe X sur toute la longueur de la base 41. Le rouleau d'entraînement 44 est en outre agencé dans le chariot 40 sensiblement au niveau de la jonction entre la base 41 et le socle 42. Le rouleau d'entraînement 44 est bien entendu monté pivotant sur le chariot 40 selon un axe de pivotement parallèle au premier axe X.

De préférence, le chariot 40 comporte d'autres rouleaux pour faciliter le dévidement de la gaine. Ces rouleaux sont ici non motorisés.

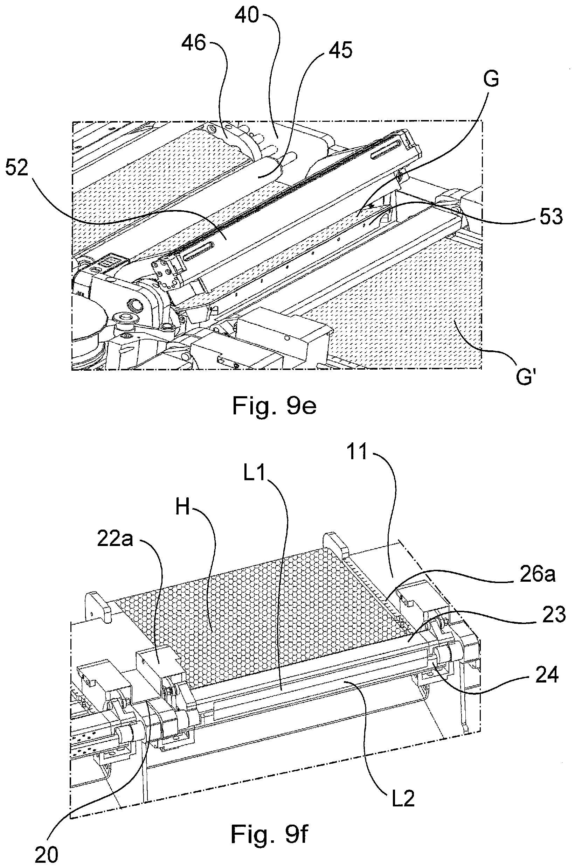

De façon particulière, le chariot 40 comporte un premier rouleau secondaire 45 (visible seulement à la figure 9e) agencé de sorte à s'étendre parallèlement au premier axe X et monté pivotant parallèlement au premier axe X, le premier rouleau secondaire 45 étant monté sur la base 41 entre le rouleau d'entraînement 44 et le deuxième bord longitudinal 43 de la base 41.

De préférence, le chariot 40 comporte également un carrousel 46 de rouleaux et de contre-rouleaux secondaires formant conjointement un arc de cercle, les différents rouleaux et contre-rouleaux s'étendant tous parallèlement au premier axe X et étant tous montés pivotant parallèlement au premier axe X sur la base 41. Le carrousel 46 est ici agencé entre le premier rouleau secondaire 45 et le rouleau d'entraînement 44.

De la sorte, la gaine à dévider s'étend depuis la table de raccordement 11 jusqu'au carrousel 46 sensiblement horizontalement puis du carrousel jusqu'au niveau du rouleau d'entraînement 44 de nouveau horizontale.

De préférence, le socle 42 comporte un rouleau de renvoi 48 s'étendant transversalement au socle 42 en partie haute du socle 42 selon un axe E. Le rouleau de renvoi 48 s'étend ici dans un plan vertical mais obliquement relativement au premier axe X et au troisième axe Z. Typiquement le rouleau de renvoi 48 s'étend à environ 45 degrés du premier axe X et à environ 45 degrés du troisième axe Z. Le rouleau de renvoi 48 est non motorisé.

De la sorte, la gaine s'étend depuis le rouleau d'entraînement 44 du chariot 40 sensiblement verticalement vers le plafond du dispositif 1 (sensiblement parallèlement au socle 42), puis s'étend depuis le rouleau de renvoi 48 vers l'extérieur du dispositif 1 selon un plan de normale le deuxième axe Y. Le rouleau de renvoi 48 permet ainsi de modifier la direction de défilement de la gaine afin de faciliter sa sortie du dispositif 1.

Bien entendu, en fonction du reste de l'installation (comme par exemple la position relative entre le dispositif 1 et de la machine 3), le dispositif 1 peut comprendre plusieurs autres rouleaux motorisés ou non pour modifier l'orientation et/ou la direction de défilement de la gaine ainsi que pour assurer une bonne tension de la gaine vers la sortie du dispositif 1. Ces moyens étant bien connus par ailleurs, ils ne seront pas davantage détaillés ici.

En sortie du dispositif 1, le dispositif comporte un accumulateur 2 par lequel passe la gaine avant d'atteindre la machine 3.

Selon un mode de réalisation particulier, le chariot 40 comporte une extension 49 s'étendant en direction du plancher du bâti 10, l'extension portant elle-même un galet d'entraînement 50 motorisé. Le chariot 40 est ainsi agencé de sorte que lorsque le chariot 40 est au niveau de l'un des bloqueurs, le galet d'entraînement 50 se situe au niveau du compartiment de la bobine considérée pour pouvoir entraîner en rotation directement la bobine ou un élément du compartiment lié en rotation à la bobine comme par exemple le disque 16 agencé sur la goulotte une fois la bobine en place sur la goulotte.

Ceci permet de faciliter le dévidement de la gaine.

En complément ou en remplacement des capteurs de détection sur les bras 22a, 22b, 22c, 22d, le chariot 40 comporte un capteur de détection de la fin d'une bobine (non représenté ici), le capteur étant raccordé à l'organe de commande 25. Le capteur détecte typiquement la présence d'un marqueur agencé sur la fin d'une bobine et la communication de cette information à l'organe de commande 25 entraine le déclenchement d'un processus de raccordement d'une nouvelle bobine. Le capteur est ainsi agencé sur le chariot 40 au niveau du trajet de la gaine dans le chariot 40 pour surplomber ladite gaine. Le capteur est par exemple porté par une tige s'étendant au-dessus des rouleaux et contre-rouleaux secondaires du chariot 40.

Au niveau du deuxième bord longitudinal 43 de la base 41, le chariot 40 comporte des moyens de préparation de l'extrémité terminale de la gaine en train d'être dévidée pour son raccordement à une nouvelle gaine.

Lesdits moyens comportent un organe de coupe 51 de l'extrémité de la gaine en train d'être dévidée.

A cet effet, l'organe de coupe 51 comportent une première baguette 52 agencée dans le chariot 40 de sorte à s'étendre selon un axe C parallèlement au premier axe X sur toute la longueur de la base 41.

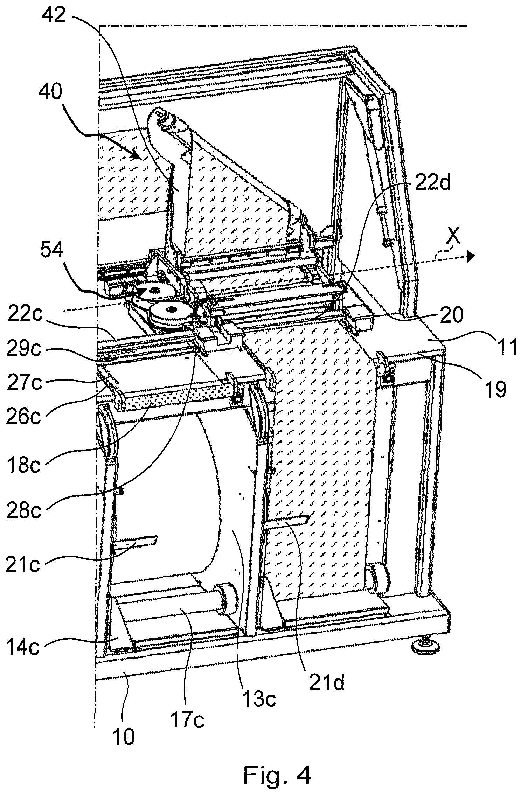

La première baguette 52 est montée pivotante sur le chariot entre une position active dans laquelle la première baguette 52 est au contact de la gaine et une position passive dans laquelle la première baguette 52 est décalée de ladite gaine (comme illustré à la figure 4). La première baguette 52 est par exemple montée mobile entre la position active et la position passive sur le chariot 40 par un mouvement de rotation d'axe C.

La première baguette 52 est munie d'une lame (non référencée ici) montée coulissante dans la première baguette 52 selon l'axe C. De préférence la première baguette 52 comporte en outre des moyens d'actionnement de la lame afin de provoquer le déplacement automatique de la lame le long de l'axe C. Les moyens d'actionnement comportent par exemple un vérin d'actionnement de la lame. L'organe de commande 25 contrôle le mouvement de rotation de la première baguette 52 autour de l'axe X ainsi que le mouvement de translation de sa lame. Alternativement, la lame peut être agencée de sorte que les moyens d'actionnement associés provoquent une translation de la lame de haut en bas et non le long de de l'axe C comme précité.

Par ailleurs, les moyens de préparation de l'extrémité terminale de la gaine comportent une deuxième baguette 53 agencée de sorte à s'étendre selon un axe D parallèlement au premier axe X sur toute la longueur de la base 41. La deuxième baguette 53 s'étend ici sur le chariot 40 sensiblement sous la première baguette 52.

La deuxième baguette 53 est montée pivotante sur le chariot 40 entre une position abaissée dans laquelle la deuxième baguette 53 s'étend sensiblement dans le prolongement du reste de la base 41 et une position relevée dans laquelle la deuxième baguette 53 s'étend transversalement à la base 41 en direction du plafond du dispositif 1. La deuxième baguette 53 est par exemple montée mobile entre la position abaissée et la position relevée par un mouvement de rotation d'axe D. Cette rotation est de préférence motorisée.

De préférence, la deuxième baguette 53 est conformée en une barre aspirante dont les trous d'aspiration sont bien entendu en vis-à-vis de la gaine lorsque la deuxième baguette 53 est en position abaissée.

Ceci va permettre de plaquer au mieux la gaine sur la deuxième baguette 53 au moment de la préparation de l'extrémité terminale de la gaine ce qui va faciliter le raccordement entre les gaines comme nous le verrons par la suite.

L'organe de commande 25 contrôle le mouvement de rotation d'axe D de la deuxième baguette 53 ainsi que son alimentation par la pompe à vide.

De préférence, le chariot 40 lui-même va permettre l'encollage interne des lèvres de la nouvelle gaine.

A cet effet, le chariot 40 comporte ici un premier système d'encollage qui est ici un premier distributeur 54 d'adhésif et un deuxième système d'encollage qui est ici un deuxième distributeur 55 d'adhésif (dont une partie seulement est représentée aux différentes figures) comprenant respectivement chacun une plateforme. Chaque plateforme s'étend typiquement dans le prolongement de la base 41 (selon le premier axe X) et est solidarisée à ladite base 41 de sorte que la première plateforme 56 s'étend d'un côté de la base 41 et l'autre des plateformes 57 s'étend de l'autre côté de la base 41.

De façon avantageuse, la présence des deux distributeurs 54, 55 et leur agencement permet d'assurer plus rapidement un encollage des lèvres de la nouvelle gaine. Par ailleurs, ceci permet de réduire également la longueur (selon le premier axe X) du dispositif 1.

Selon un mode de réalisation particulier, les distributeurs 54, 55 sont conformés de sorte que chaque distributeur 54, 55 puisse assure seul l'encollage interne simultanée des deux lèvres de la nouvelle gaine.

De préférence, chaque distributeur 54, 55 est agencé de sorte qu'un même rouleau adhésif permet d'encoller de manière simultanée l'intérieur des deux lèvres de la nouvelle gaine.

Les deux distributeurs 54, 55 étant identiques, un seul distributeur 54 va être ici décrit, la description s'appliquant bien entendu à l'autre distributeur 55.

Selon un mode de réalisation particulier, le distributeur 54 fonctionne sur le principe de celui d'un roller de correction.

Ainsi, le distributeur 54 n'est pas motorisé. De par l'agencement du chariot 40 et du distributeur 54 c'est le simple mouvement du chariot 40 relativement à la nouvelle gaine qui va provoquer l'apposition de l'adhésif sur la nouvelle gaine.

Le distributeur 54 comporte typiquement un premier bobineau 58 sur lequel est monté un rouleau d'adhésif pour le dévidement du rouleau d'adhésif et un deuxième bobineau 59 pour le ré-enroulement de la bande support du rouleau d'adhésif, les deux bobineaux 58, 59 étant agencés sur la plateforme 56 de sorte à être mobiles en rotation sur la plateforme 56 selon des axes de rotation parallèles au troisième axe Z.

Le distributeur 54 comporte également un cylindre d'apposition 60 de l'adhésif du rouleau d'adhésif qui est destiné à venir aux contacts des faces internes des lèvres de l'extrémité initiale d'une gaine. Le cylindre d'apposition 60 est agencé sur la plateforme 56 de sorte à être mobile en rotation sur la plateforme 56 selon un axe e rotation parallèle au troisième axe Z.

Ainsi, le distributeur 54 est agencé de sorte qu'en service, le rouleau d'adhésif soit posé sur le premier bobineau 58 et que la bande support correspondante passe du premier bobineau 58 au cylindre d'apposition 60 en entourant le dit cylindre d'apposition 60 avant de venir s'enrouler sur le deuxième bobineau 59. Par ailleurs, le distributeur 54 est agencé de sorte que la largeur de la bande support du rouleau d'adhésif s'étende parallèlement au troisième axe Z.

Afin de faciliter l'apposition de l'adhésif porté par la bande support, le distributeur 54 comporte ici des galets tendeurs. Un premier galet tendeur 61 est ainsi agencé sur la plateforme entre le premier bobineau 58 et le cylindre d'apposition 60 et un deuxième galet tendeur 62 est agencé sur la plateforme 56 au niveau du deuxième bobineau 59. Les deux galets tendeur 61, 62 s'étendent au niveau de la trajectoire de la bande support pour assurer une bonne tension de ladite bande.

De façon particulière, une courroie 63 entoure les deux bobineaux 58, 59 pour synchroniser mécaniquement leurs rotations. Ceci facilite encore davantage l'apposition de l'adhésif sur les faces internes des lèvres de l'extrémité initiale de la nouvelle gaine.

De façon particulière, le distributeur 54 comporte un doigt de retour 64 agencé sur la plateforme 56 au niveau du cylindre d'apposition 60 et du premier galet tendeur 61 pour avancer la bande support, relativement au cylindre d'apposition 60, à chaque fin d'encollage des lèvres d'une extrémité initiale. De la sorte, on s'assure de la présence d'adhésif au niveau du cylindre d'apposition 60 pour la prochaine séquence d'encollage. Ce doigt de retour 64 est par exemple actionnable automatiquement ou alors mécaniquement par ressort.

Typiquement le distributeur 54 est montée mobile relativement à la base 41 entre une position d'apposition où le cylindre d'apposition 60 est au contact des lèvres de l'extrémité initiale d'une gaine (soit sensiblement au niveau des deux barres aspirantes 23, 24 du bâti 10 en vis-à-vis) et une position de retrait où le distributeur 54 est légèrement décalé vers l'arrière de la base 41 afin d'assurer un léger décalage entre le cylindre d'apposition 60 et les barres aspirantes 23, 24 du bâti 10. Par exemple, le distributeur 54 est montée mobile en translation relativement à la base 41 entre ces deux positions selon une translation d'axe parallèle au deuxième axe Y.

Ainsi, une fois l'adhésif posé sur les lèvres, le distributeur 54 peut se décaler vers l'arrière pour faciliter le retrait des lèvres du cylindre d'apposition 60 sur lequel est plaquée la bande support du rouleau d'adhésif.

Alternativement le distributeur 54 est rigidement fixé à la base 41. Alternativement encore, seule une partie du distributeur 54 (par exemple le cylindre d'apposition 60) est montée mobile vis-à-vis de la base 41 pour assurer ce mouvement de retrait du cylindre d'apposition 60.

En référence à la figure 8, le rouleau d'adhésif va être décrit plus en détail. Le rouleau d'adhésif porte de l'adhésif double face afin d'assurer un encollage interne des deux gaines.

Le rouleau d'adhésif est de préférence conformé de sorte que la bande support dudit rouleau d'adhésif comporte, sur toute la longueur du rouleau d'adhésif, symbolisé ici par une flèche, une zone centrale 70 sans adhésif et deux zones frontalières 71, 72 recouvertes d'adhésif et entourant ladite zone centrale 70. Ainsi sur la largeur de la bande support (et pour toute la longueur du rouleau d'adhésif) on trouve successivement une zone frontalière 71 avec adhésif, une zone centrale 70 sans adhésif et une zone frontalière 72 avec adhésif.

Ceci va faciliter l'encollage des faces internes des lèvres de l'extrémité initiale d'une gaine puisque chaque zone frontalière va venir respectivement au contact de l'une desdites faces internes.

De préférence, les zones frontalières 71, 72 sont prédécoupées à intervalles réguliers sur la longueur du rouleau d'adhésif. Par exemple ce prédécoupage est assuré par des microcoupures formées à intervalles réguliers sur l'adhésif sur la longueur du rouleau d'adhésif. On définit le prédécoupage de sorte que deux lignes de prédécoupe 73 (une seule étant référencée ici) définissent ensemble une longueur d'adhésif correspondant à la longueur d'une lèvre d'une gaine à encoller.

Ceci va faciliter le détachement des zones frontalières 71, 72 au niveau des microcoupures et donc va faciliter encore davantage le retrait du cylindre d'apposition 60 des lèvres à encoller. En particulier, le dispositif de raccordement selon le mode de réalisation particulier de l'invention s'affranchit ainsi d'un outil de coupe dédié à la découpe de l'adhésif.

De préférence, le rouleau d'adhésif est en outre conformé de sorte que les zones frontalières 71, 72 comportent chacune des marqueurs 74 (dont un seul est référencé à la figure 8) qui sont agencés à intervalles réguliers sur la longueur de la zone frontalière correspondante pour la détection d'un raccordement des deux gaines tubulaires aplaties. Les marqueurs sont par exemple des éléments en matière métallique.

En variante seule l'une des deux zones frontalières 71, 72 comporte une succession de marqueurs 74 sur sa longueur.

Le rouleau d'adhésif est conformé de sorte que chaque portion d'adhésif délimitée par deux lignes de prédécoupe 73 comporte un marqueur 74.

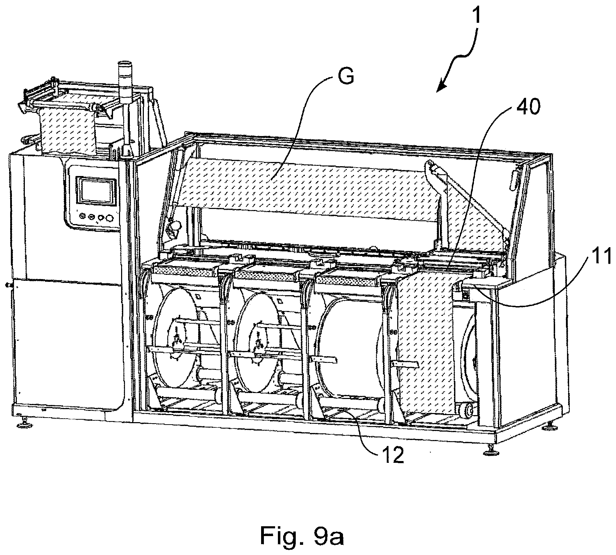

En référence aux figures 9a à 9i, une mise en œuvre du dispositif qui vient d'être détaillé va être à présent décrite.

La figure 9a illustre le dispositif lorsqu'aucune procédure de raccordement n'a été lancée.

Seule une gaine G se déroule alors naturellement depuis le magasin 12 jusqu'en sortie du dispositif 1 et ce en passant par la table de raccordement 11 et le chariot 40.

Les autres compartiments sont vides ou comportent des gaines en attente de raccordement.

Il est alors possible pour l'opérateur de travailler sur le magasin 12 pour préparer de nouvelles extrémités initiales de gaines.

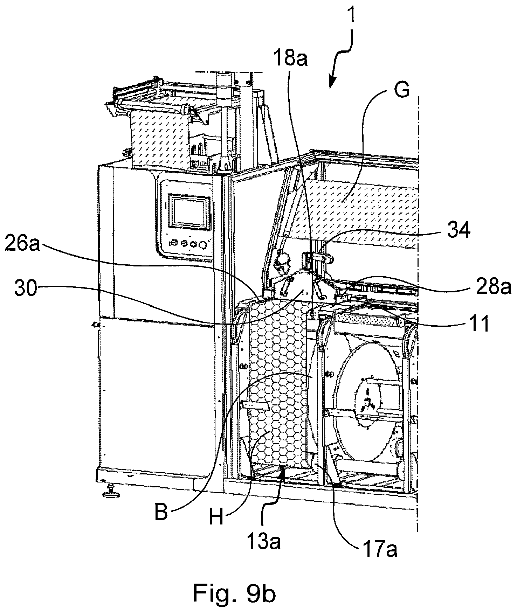

Comme visible à la figure 9b, l'opérateur agence par exemple une nouvelle bobine d'une gaine H dans un compartiment vide, par exemple 13a, en posant la bobine sur la goulotte puis en agençant le disque de maintien sur la bobine.

L'opérateur place alors la barre supérieure aspirante 23 du bloqueur 22a (associé au compartiment 13a dans lequel on vient d'agencer la bobine) en position d'écartement.

L'opérateur tire ensuite l'extrémité initiale de la gaine H depuis le compartiment 13a, l'enroule autour du premier rouleau de renvoi, du deuxième rouleau de renvoi 17a et du troisième rouleau de renvoi 18a afin de placer l'extrémité initiale sur la table de raccordement 11 entre les deux barres aspirantes 23, 24 du bloqueur 22a.

L'opérateur replace alors la barre aspirante supérieure 23 dans la position de blocage bloquant ainsi l'extrémité initiale entre les deux barres aspirantes 23, 24 relativement au bâti 10.

L'opérateur emboîte alors l'appareil de coupe 30 sur la table de raccordement 11 au niveau des moyens d'encliquetage associés 28a au bloqueur 22a puis actionne la poignée supplémentaire 34 pour découper l'extrémité initiale et former ainsi les lèvres de l'extrémité initiale.

L'opérateur peut avantageusement s'aider de la réglette 26a et/ou le repère 27a de la table de raccordement 11 pour positionner de manière prédéterminée l'extrémité initiale vis-à-vis de l'appareil de coupe 30 afin que la coupe de l'extrémité initiale se fasse à une hauteur prédéterminée (selon le sens de déroulement de la gaine H). L'opérateur peut également s'aider à cet effet du tapis de protection 29a.

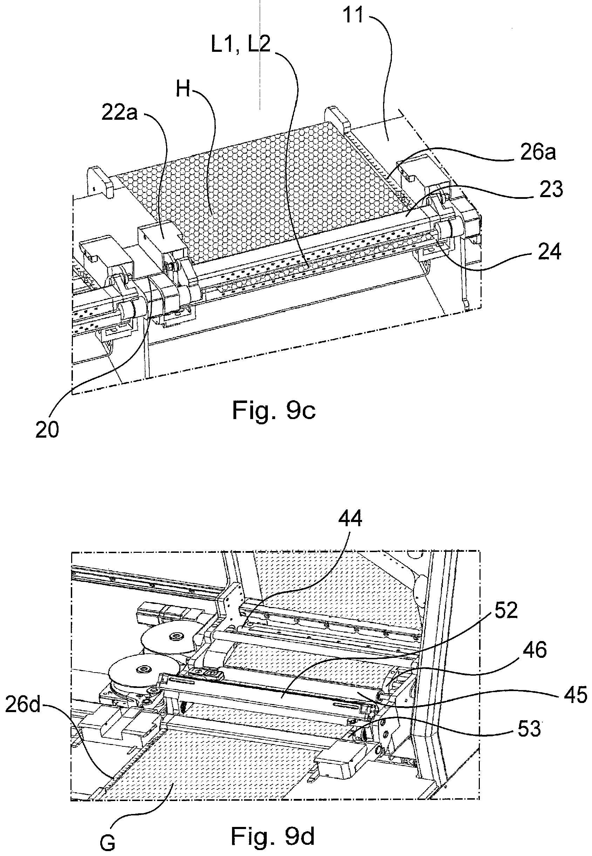

Comme illustré à la figure 9c, l'appareil de coupe 30 est ensuite retiré et l'opérateur vient alors placer la barre aspirante supérieure 23 en position d'écartement pour positionner de nouveau correctement l'extrémité initiale de manière appropriée vis-à-vis de la table de raccordement 11 avant de placer de nouveau la barre aspirante supérieure 23 en position de blocage pour bloquer l'extrémité initiale entre les deux barres aspirantes 23, 24. Typiquement l'opérateur agence l'extrémité initiale de sorte que seules les lèvres L1, L2 de l'extrémité initiale dépassent du bloqueur 22a et donc de la table de raccordement 11 vis-à-vis du deuxième bord longitudinal 20 de la table de raccordement 11.

De par la découpe de l'extrémité initiale, les deux lèvres L1, L2 sont ainsi agencées l'une au-dessus de l'autre et plaquées l'une contre l'autre.

La gaine H est ainsi prête à son raccordement à la gaine G en cours de dévidement.

On peut donc préparer de la sorte les différentes bobines du magasin 12 sans gêner le déroulement de la bobine en cours de dévidement et sans avoir besoin d'arrêter le défilement de la gaine G en cours de dévidement.

Puis, lors de la détection de la fin de la bobine en cours de défilement, l'organe de commande 25 vient couper l'alimentation du rouleau d'actionnement 44 et du galet d'entraînement 50 du chariot 40 de sorte que la bobine arrête de se dévider. La présence de l'accumulateur 2 du dispositif 1 permet toutefois à la machine 3 de continuer à fonctionner normalement sans interruption le temps que le raccordement s'effectue.

Le dévidement de la bobine est arrêté de sorte que la bobine s'arrête à une hauteur prédéterminée dans le chariot 40.

En référence à la figure 9d, la deuxième baguette aspirante 53 du chariot 40 est commandée pour aspirer la gaine G en cours de défilement ce qui va coller la gaine G à la deuxième baguette aspirante 53.

La lame de la première baguette 52 du chariot 40 découpe alors la gaine G pour désolidariser la gaine G présente dans le chariot 40 du restant de la bobine correspondante G' présent dans le magasin 12. La deuxième baguette aspirante 53 permet avantageusement de maintenir la gaine G en place pendant la découpe puis de maintenir en place l'extrémité terminale de la gaine G une fois celle-ci découpée.

Comme visible à la figure 9e, on relève alors la deuxième baguette aspirante 53 dans la position relevée ce qui va permettre de soulever l'extrémité terminale évitant ainsi que ladite extrémité terminale ne gêne un déplacement du chariot 40 lors du transport du chariot 40 jusqu'à l'une des extrémités initiales de gaines en attente.

En référence à la figure 9f, les différentes barres aspirantes de la table de raccordement 11 sont alors alimentées. Au niveau des barres aspirantes entre lesquelles sont insérées des extrémités initiales de gaines, cette aspiration va écarter les lèvres d'une même extrémité initiale l'une de l'autre.

En effet, de par l'agencement des extrémités initiales, l'aspiration des barres aspirantes entraîne le plaquage de la lèvre supérieure L1 de chaque extrémité initiale sur la barre aspirante supérieure 23 du bloqueur associé et le plaquage de la lèvre inférieure L2 de chaque extrémité initiale sur la barre aspirante inférieure 24 associée.

On note que la forme de l'extrémité initiale (de par ses lèvres) facilite son ouverture.

L'ouverture de toutes les lèvres des extrémités initiales des gaines en attente évite ainsi que lesdites extrémités initiales ne gênent un déplacement du chariot 40 lors du transport du chariot 40 jusqu'à l'une de ces extrémités initiales.

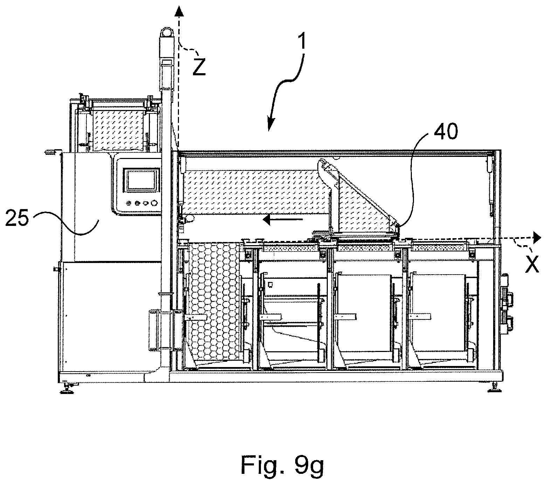

En référence à la figure 9g, le chariot 40 est ensuite déplacé selon le premier axe X, l'organe de commande 25 déterminant au niveau de quelle extrémité initiale en attente il vient positionner le chariot 40. Le mouvement du chariot 40 est ici symbolisé par une flèche.

Au cours du déplacement du chariot 40, on utilise avantageusement les mouvements d'avance et de recul des distributeurs 54, 55 relativement au reste du chariot 40 pour ne venir encoller que l'intérieur de l'extrémité initiale visée par l'organe de commande 25.

Au niveau de l'extrémité initiale visée, le distributeur en amont du chariot 40 (selon la direction de coulissement du chariot 40), ici 54, se trouve dans sa position d'apposition. Du fait que les lèvres soient ouvertes, le simple appui du cylindre d'apposition 60 associé portant la bande d'adhésif et du mouvement relatif entre le distributeur 54 et lesdites lèvres selon le premier axe X va permettre de déposer de l'adhésif sur les deux lèvres simultanément.

Les lèvres L1, L2 se retrouvent ainsi toutes deux encollées avec respectivement une bande d'adhésif A1, A2.

Le chariot 40 poursuit par ailleurs son déplacement de coulissement selon le premier axe X jusqu'à ce que l'extrémité terminale se trouve dans le prolongement de l'extrémité initiale.

On note que dans un même mouvement de translation du chariot 40, on vient tout à la fois encoller l'extrémité initiale avant d'amener l'extrémité terminale en vis-à-vis de l'extrémité initiale. Ceci facilite le raccordement entre les deux extrémités en limitant les mouvements relatifs au sein du dispositif 1 notamment entre le chariot 40 et le bâti 10.

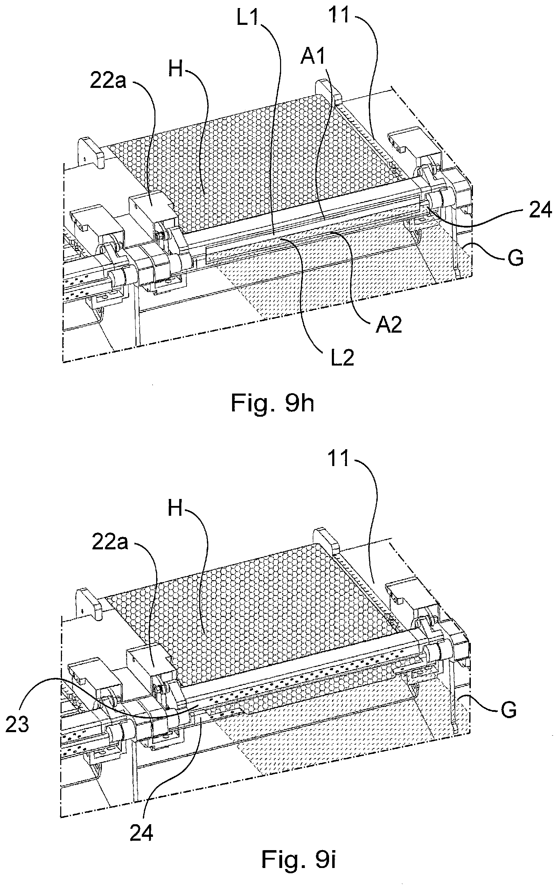

La deuxième baguette aspirante 53 du chariot 40 est alors placée dans sa position abaissée pour abaisser l'extrémité terminale au niveau de l'extrémité initiale. L'extrémité terminale se trouve alors agencée entre les deux lèvres ouvertes de l'extrémité initiale comme illustré à la figure 9h (le chariot 40 n'étant pas représenté pour plus de visibilité et l'ancienne gaine G étant illustrée simplement en pointillés toujours pour faciliter la lecture des figures).

En référence à la figure 9i, les deux barres aspirantes 23, 24 du bloqueur 22a sont alors basculées en position de rabattement.

Ceci va provoquer la fermeture des lèvres de l'extrémité initiale sur l'extrémité terminale et ainsi le scellage des deux gaines G, H par l'intérieur.

De la sorte, on note que la base 41 est mobile relativement au bâti selon un unique mouvement de translation (ici selon le premier axe X). Le chariot 40 comporte par ailleurs ici une deuxième baguette 52 montée mobile relativement à la base 41 qui elle permet un simple mouvement de rotation de l'extrémité terminale vis-à-vis de l'extrémité initiale. On a donc un montage très simple du chariot 40 et notamment de la base 41 du chariot pour permettre le raccordement des deux gaines.

On note la présence de deux orifices sur les côtés du raccordement dus à la forme découpée de l'extrémité initiale. Ces orifices vont avantageusement faciliter l'ouverture de la jonction et de la nouvelle gaine au moment du passage de la nouvelle gaine dans le conformateur 4. Ceci va aussi permettre de faciliter la détection de la jonction dans la machine 3 afin de pouvoir évacuer cette jonction sans l'apposer sur un des objets O en défilement. Par ailleurs, le ou les marqueurs portés par l'adhésif au niveau du raccordement des deux gaines permet ou permettent également une détection de la jonction dans la machine 3 afin de pouvoir évacuer cette jonction sans l'apposer sur un des objets O en défilement.

Puis, l'aspiration desdites barres aspirantes 23, 24 ainsi que la deuxième baguette aspirante 53 du chariot 40 est alors coupée.

Il est alors possible de relancer le rouleau d'entraînement 44 et le galet d'entrainement 49 du chariot 40 pour provoquer le dévidement de la nouvelle bobine ainsi raccordée à l'ancienne bobine.

On a ainsi proposé un dispositif 1 permettant un raccordement efficace et rapide. En particulier la présence d'adhésif au niveau des lèvres de l'extrémité initiale suffit au raccordement avec l'extrémité terminale et le chariot 40 n'effectue qu'un seul mouvement de coulissement pour encoller et amener les deux gaines en vis-à-vis.

On note qu'avec le dispositif 1 ainsi décrit, l'ajustement entre les deux extrémités s'avère relativement simple puisqu'il suffit de gérer la position longitudinale relative entre le chariot 40 et le bloqueur associé à la nouvelle gaine (selon le premier axe X) pour amener les gaines en vis-à-vis.

L'invention n'est pas limitée à ce qui vient d'être décrit mais englobe au contraire toute variante entrant dans le cadre défini par les revendications.

En particulier, bien qu'ici le chariot porte directement le distributeur pour encoller l'extrémité initiale avant d'amener l'extrémité terminale en regard, le chariot pourra n'être conformé que pour agencer les deux extrémités en regard l'une de l'autre et/ou pourra n'être agencé que pour encoller l'extrémité initiale. Par exemple si le chariot déplace simplement l'extrémité terminale, le dispositif pourra comporter d'autres moyens d'encollage des lèvres comme par exemple des pinces basculantes venant encoller les lèvres une fois celles-ci ouvertes et avant un déplacement du chariot. Par exemple si le chariot est agencé simplement pour encoller l'extrémité initiale, un autre élément, par exemple un autre chariot pourra venir agencer en vis-à-vis les deux gaines.

Par ailleurs, le chariot pourra être agencé pour effectuer d'autres mouvements pour mettre en vis-à-vis les deux gaines qu'un mouvement de coulissement de la base relativement au bâti.

Bien qu'ici l'apposition de l'adhésif se fasse naturellement de par le simple déplacement du chariot relativement aux lèvres à encoller, le distributeur du chariot pourra au contraire être motorisé pour déposer l'adhésif.

Bien qu'ici un même rouleau d'adhésif permette d'encoller les deux lèvres, on pourra avoir recours à d'autres rouleaux, d'autres adhésifs et/ou de manière générale d'autres systèmes d'encollage pour encoller simultanément ou non les deux lèvres que les distributeurs d'adhésif précédemment décrits comme par exemple un système d'encollage pour la dépose d'une colle liquide sur les lèvres.

En place d'avoir un appareil de coupe déplaçable sur le bâti, on pourra avoir un appareil de coupe associé à chaque bloqueur et non déplaçable d'un bloqueur à un autre.

On pourra s'affranchir d'un tel appareil de coupe. On pourra également s'affranchir d'une nouvelle étape de positionnement de la gaine une fois son extrémité initiale découpée. Par exemple on pourra tirer la gaine jusqu'à ce qu'un repère fixe ou un capteur du dispositif soit au niveau d'un index prévu à cet effet sur l'extrémité initiale de la gaine, découper alors dans cette position la gaine qui sera alors directement dans la bonne position d'attente.

Bien qu'ici l'accumulateur fasse partie du dispositif, le dispositif pourra ne pas comprendre d'accumulateur et être ou non relié à un accumulateur extérieur au dispositif.

Le dispositif pourra bien entendu comprendre d'autres éléments que ceux décrits. Le dispositif pourra ainsi comprendre un couvercle de protection venant isoler le chariot et les rails sur lequel le chariot coulisse de l'opérateur pour le protéger. L'opérateur n'aura alors accès qu'à partie ou tout le bâti pour pouvoir changer les bobines. Les distributeurs d'adhésif pourront en complément ou en remplacement comprendre également un boîtier de protection pour isoler le rouleau d'adhésif de l'extérieur. Le boîtier sera alors bien sûr amovible pour qu'un opérateur puisse le soulever et changer le rouleau d'adhésif.

Pour faciliter le guidage de la gaine dans son défilement, les différents rouleaux et contre-rouleaux de renvois, d'actionnement, secondaires ... du dispositif pourront tous (ou une partie seulement d'entre eux) comporter un galet agencé sur le rouleau associé de sorte à être positionné pour être en contact avec l'un des bords de la gaine. On note qu'il s'avèrera aisé de modifier la position des galets pour s'adapter à une autre largeur de gaine ce qui rendra l'installation modulable.

Le dispositif pourra comporter un ou des gabarits de coupe associés par exemple à chaque bloqueur tapis pour faciliter encore davantage le placement de l'extrémité de la gaine selon une position prédéterminée pour la découpe de l'extrémité initiale et/ou le positionnement de l'extrémité initiale dans l'attente de son raccordement à la gaine en cours de défilement.

D'autres éléments aspirants pourront être associés au bâti et/ou au chariot. Par exemple la table raccordement pourra être conformée pour présenter au niveau de son deuxième bord longitudinal des trous d'aspiration pour bien plaquer la gaine contre la table aspirante lors du moment de la jonction avec la gaine en cours de dévidement.

Ce pourra être le chariot qui porte le bloqueur et les moyens d'ouverture correspondant. On pourra ainsi encoller la face interne de l'extrémité terminale pour la refermer sur l'extrémité initiale. Un distributeur d'adhésif pourra par exemple être agencé en extrémité du bâti et le chariot passera d'abord à son niveau pour encoller les lèvres de l'extrémité de la gaine qu'il porte avant de placer ladite gaine en regard d'une nouvelle gaine.

## Revendications

1. Dispositif de raccordement de deux gaines tubulaires aplaties comportant :
- un bloqueur (22a, 22b, 22c, 22d) d'une extrémité d'une première gaine, le bloqueur comprenant des moyens d'ouverture d'une extrémité de la première gaine,
- un système d'encollage,
le dispositif étant **caractérisé en ce que** :
- le système d'encollage est agencé pour encoller l'intérieur de l'extrémité ouverte de la première gaine,
- le bloqueur est agencé pour autoriser une fermeture de l'extrémité de la première gaine, une fois celle-ci encollée, sur une extrémité de la deuxième gaine.

2. Dispositif selon la revendication 1, dans lequel le système d'encollage comporte un distributeur d'adhésif (54, 55).

3. Dispositif selon la revendication 1 ou la revendication 2, dans lequel le dispositif comporte un bâti (10), le bloqueur (22a, 22b, 22c, 22d) étant agencé sur le bâti.

4. Dispositif selon l'une des revendications précédentes, dans lequel le dispositif comporte un chariot (40) de déplacement d'une extrémité de la deuxième gaine relativement à la première gaine.

5. Dispositif selon la revendication 4, dans lequel le chariot (40) comporte une base destinée à supporter la deuxième gaine, la base étant agencée dans le dispositif de sorte à être mobile en translation relativement à un bâti (10) du dispositif selon un seul mouvement de translation.

6. Dispositif selon la revendication 4 ou la revendication 5, dans lequel le chariot (40) porte le système d'encollage pour encoller l'extrémité de la première gaine.

7. Dispositif selon la revendication 6, dans lequel le chariot (40) comporte deux systèmes d'encollage agencés à des extrémités opposées du chariot.

8. Dispositif selon l'une des revendications 4 à 7, dans lequel le chariot (40) comporte une extension (49) portant un galet d'entraînement (50) motorisé, le chariot (40) est ainsi agencé de sorte que lorsque le chariot (40) est au niveau de l'un des bloqueurs, le galet d'entraînement (50) se situe au niveau de la bobine formée par la gaine pour pouvoir entraîner en rotation directement la bobine ou un élément lié en rotation à la bobine.

9. Dispositif selon l'une des revendications 7 à 8, dans lequel le chariot (40) comporte des moyens de préparation de l'extrémité de la deuxième gaine.

10. Dispositif selon la revendication 9, dans lequel les moyens de préparation de l'extrémité de la deuxième gaine comportent un organe de coupe (51) de l'extrémité de la deuxième gaine.

11. Dispositif selon l'une des revendications 9 ou 10, dans lequel les moyens de préparation de l'extrémité de la deuxième gaine comportent une deuxième baguette (53) montée mobile sur le chariot (40) entre une position abaissée dans laquelle la baguette s'étend sensiblement dans le prolongement du reste du chariot et une position relevée dans laquelle la deuxième baguette s'étend transversalement en direction du plafond du dispositif.

12. Dispositif selon la revendication 11, dans lequel la baguette (53) est conformée en une barre aspirante.

13. Dispositif selon l'une des revendications précédentes, dans lequel les moyens d'ouverture comportent deux barres aspirantes (23, 24) agencées l'une au-dessus de l'autre et entre lesquelles est destinée à être insérée l'extrémité de la première gaine.

14. Dispositif selon la revendication 13, dans lequel les deux barres aspirantes (23, 24) sont chacune montée mobile relativement à un bâti du dispositif entre
- une position de rabattement dans laquelle les deux barres sont agencées de sorte que des trous d'aspiration d'une des barres soient en regard des trous d'aspiration de l'autre des barres,
- une position de blocage dans laquelle les deux barres sont agencées de sorte que les trous d'aspiration des deux barres soient orientés vers l'extérieur du bloqueur.

15. Dispositif selon la revendication 14, dans lequel au moins l'une des barres est en outre montée mobile relativement au bâti (10) selon un mouvement supplémentaire afin d'être mobile entre :
- une position d'écartement dans laquelle ladite barre est décalée de l'autre barre, et
- la position d'attente dans laquelle les deux barres aspirantes sont posées l'une contre l'autre.

16. Dispositif selon l'une des revendications précédentes, comportant en outre un appareil de coupe (30) pour préparer l'extrémité de la première gaine, l'appareil de coupe comportant des moyens d'encliquetage aptes à coopérer avec des moyens d'encliquetage correspondant d'un bâti du dispositif.

17. Dispositif selon la revendication 16, dans lequel l'appareil de coupe (30) comporte une fente (35) et une lame mobile relativement à ladite fente, la fente étant ménagée de sorte à présenter une portion centrale rectiligne prolongée à ces deux extrémités par des décrochements symétriques.

18. Dispositif selon l'une des revendications précédentes, dans lequel un bâti (10) du dispositif comporte un magasin (12) de stockage de bobines, le magasin comportant des tiroirs (14a, 14b, 14c, 14d) montés coulissants relativement au bâti et portant chacun une bobine.

19. Procédé de raccordement de deux gaines tubulaires aplaties comportant les étapes successives suivantes :
- bloquer une extrémité d'une première gaine,
- ouvrir l'extrémité de la première gaine,
le procédé étant **caractérisé en ce qu'**il comporte les étapes successives suivantes :
- encoller l'intérieur de l'extrémité de la première gaine,
- refermer l'extrémité de la première gaine sur une extrémité de la deuxième gaine.

## Patentansprüche

1. Vorrichtung zur Verbindung von zwei flachgedrückten röhrenförmigen Schläuchen, umfassend:
- einen Blockierer (22a, 22b, 22c, 22d) zum Festklemmen eines Endes eines ersten Schlauchs, wobei der Blockierer Mittel zum Öffnen eines Endes des ersten Schlauchs umfasst,
- ein Klebstoffauftragssystem,
wobei die Vorrichtung **dadurch gekennzeichnet, dass**:
- das Klebstoffauftragssystem ausgebildet ist, Klebstoff auf das Innere des offenen Endes des ersten Schlauchs aufzutragen,
- der Blockierer ausgebildet ist, sobald Klebstoff auf das Ende aufgetragen wurde, ein Schließen dieses Endes des ersten Schlauchs auf ein Ende des zweiten Schlauchs zu gestatten.

2. Vorrichtung nach Anspruch 1, bei der das Klebstoffauftragssystem einen Klebstoffverteiler (54, 55) umfasst.

3. Vorrichtung nach Anspruch 1 oder Anspruch 2, bei der die Vorrichtung ein Gestell (10) umfasst, wobei der Blockierer (22a, 22b, 22c, 22d) an dem Gestell angeordnet ist.

4. Vorrichtung nach einem der vorhergehenden Ansprüche, bei der die Vorrichtung einen Schlitten (40) zum Verschieben eines Endes des zweiten Schlauchs relativ zum ersten Schlauch umfasst.

5. Vorrichtung nach Anspruch 4, bei der der Schlitten (40) eine Basis umfasst, die dazu bestimmt ist, den zweiten Schlauch zu tragen, wobei die Basis in der Vorrichtung derart ausgebildet ist, dass sie in Translation relativ zu einem Gestell (10) der Vorrichtung in einer einzigen Translationsbewegung beweglich ist.

6. Vorrichtung nach Anspruch 4 oder Anspruch 5, bei der der Schlitten (40) das Klebstoffauftragssystem trägt, um Klebstoff auf das Ende des ersten Schlauchs aufzutragen.

7. Vorrichtung nach Anspruch 6, bei der der Schlitten (40) zwei Klebstoffauftragssysteme umfasst, die an entgegengesetzten Enden des Schlittens angeordnet sind.

8. Vorrichtung nach einem der Ansprüche 4 bis 7, bei der der Schlitten (40) eine Verlängerung (49) umfasst, die eine motorisierte Antriebsrolle (50) trägt, der Schlitten (40) somit derart ausgebildet ist, dass, wenn der Schlitten (40) im Bereich eines der Blockierer ist, sich die Antriebsrolle (50) im Bereich der Rolle befindet, die von dem Schlauch gebildet wird, um die Rolle oder ein drehfest mit der Rolle verbundenes Element direkt in Drehung antreiben zu können.

9. Vorrichtung nach einem der Ansprüche 7 bis 8, bei der der Schlitten (40) Präparationsmittel zum Präparieren des Endes des zweiten Schlauchs umfasst.

10. Vorrichtung nach Anspruch 9, bei der die Präparationsmittel zum Präparieren des Endes des zweiten Schlauchs ein Schneidorgan (51) zum Schneiden des Endes des zweiten Schlauchs umfassen.

11. Vorrichtung nach einem der Ansprüche 9 oder 10, bei der die Präparationsmittel zum Präparieren des Endes des zweiten Schlauchs eine zweite Leiste (53) umfassen, die an dem Schlitten (40) beweglich zwischen einer abgesenkten Position, in der sich die Leiste im Wesentlichen in der Verlängerung des Rests des Schlittens erstreckt, und einer angehobenen Position gelagert ist, in der sich die zweite Leiste quer in Richtung zur Decke der Vorrichtung erstreckt.

12. Vorrichtung nach Anspruch 11, bei der die Leiste (53) als Saugleiste geformt ist.

13. Vorrichtung nach einem der vorhergehenden Ansprüche, bei der die Öffnungsmittel zwei Saugleisten (23, 24) umfassen, die übereinander angeordnet sind und zwischen denen das Ende des ersten Schlauchs eingefügt werden soll.

14. Vorrichtung nach Anspruch 13, bei der die beiden Saugleisten (23, 24) jeweils relativ zu einem Gestell der Vorrichtung beweglich gelagert sind zwischen:
- einer umgelegten Position, in der die beiden Leisten derart angeordnet sind, dass sich die Sauglöcher einer der Leisten gegenüber den Sauglöchern der anderen der Leisten befinden,
- einer Blockierposition, in der die beiden Leisten derart angeordnet sind, dass die Sauglöcher der beiden Leisten zur Außenseite des Blockierers gerichtet sind.

15. Vorrichtung nach Anspruch 14, bei der mindestens eine der Leisten ferner relativ zum Gestell (10) gemäß einer zusätzlichen Bewegung beweglich gelagert ist, um beweglich zu sein zwischen:
- einer Abstandsposition, in der die genannte Leiste zu der anderen Leiste versetzt ist; und
- der Warteposition, in der die beiden Saugleisten gegeneinander gelegt sind.

16. Vorrichtung nach einem der vorhergehenden Ansprüche, ferner umfassend ein Schneidgerät (30), um das Ende des ersten Schlauchs zu präparieren, wobei das Schneidgerät Rastmittel umfasst, die geeignet sind, mit entsprechenden Rastmitteln eines Gestells der Vorrichtung zusammenzuwirken.

17. Vorrichtung nach Anspruch 16, bei der das Schneidgerät (30) einen Schlitz (35) und eine relativ zu dem genannten Schlitz bewegliche Klinge umfasst, wobei der Schlitz so ausgebildet ist, dass er einen geradlinigen zentralen Abschnitt umfasst, der an diesen beiden Enden durch symmetrische Absätze verlängert ist.

18. Vorrichtung nach einem der vorhergehenden Ansprüche, bei der ein Gestell (10) der Vorrichtung ein Magazin (12) zum Aufbewahren von Rollen umfasst, wobei das Magazin Schieber (14a, 14b, 14c, 14d) umfasst, die relativ zum Gestell verschiebbar gelagert sind und jeweils eine Rolle tragen.

19. Verfahren zum Verbinden von zwei flachgedrückten röhrenförmigen Schläuchen, umfassend die folgenden sukzessiven Schritte:
- Festklemmen eines Endes eines ersten Schlauchs,
- Öffnen des Endes des ersten Schlauchs,
wobei das Verfahren **dadurch gekennzeichnet ist, dass** es die folgenden sukzessiven Schritte umfasst:
- Auftragen von Klebstoff auf das Innere des Endes des ersten Schlauchs,
- erneutes Schließen des Endes des ersten Schlauchs auf das Ende des zweiten Schlauchs.

## Claims

1. Device for connecting together two flat tubular sheaths, the device including:
- a blocker (22a, 22b, 22c, 22d) for blocking one end of a first sheath, the blocker having opener for opening an end of the first sheath; and
- an adhesive applicator system,
the device being **characterized in that**:
- the adhesive applicator system is arranged for applying adhesive to the inside of the open end of the first sheath;
- the blocker is arranged, once adhesive has been applied to the end of the first sheath, to authorize closure of the end of the first sheath on an end of the second sheath.

2. Device according to claim 1, wherein the adhesive-applicator system includes an adhesive dispenser (54, 55) .

3. Device according to claim 1 or claim 2, wherein the device includes a frame (10), the blocker (22a, 22b, 22c, 22d) being arranged on the frame.

4. Device according to any preceding claim, wherein the device includes a carriage (40) for moving an end of the second sheath relative to the first sheath.

5. Device according to claim 4, wherein the carriage (40) includes a base for supporting the second sheath, the base being arranged in the device in such a manner as to be movable in translation relative to a frame (10) of the device with movement in translation only.

6. Device according to claim 4 or claim 5, wherein the carriage (40) carries the adhesive-applicator system in order to apply adhesive to the end of the first sheath.

7. Device according to claim 6, wherein the carriage (40) has two adhesive-applicator systems arranged at opposite ends of the carriage.

8. Device according to any one of claims 4 to 7, wherein the carriage (40) includes an extension (49) carrying a motor-driven drive wheel (50), the carriage (40) is thus arranged in such a manner that when the carriage (40) is in register with one of the blockers, the drive wheel (50) is situated in register with a reel formed by the sheath so as to be able to drive the reel in rotation either directly or via an element constrained to rotate with the reel.

9. Device according to claim 7 or claim 8, wherein the carriage (40) includes means for preparing the end of the second sheath.

10. Device according to claim 9, wherein the means for preparing the end of the second sheath include a cutter member (51) for cutting the end of the second sheath.

11. Device according to claim 9 or claim 10, wherein the means for preparing the end of the second sheath include a second strip (53) movably mounted on the carriage (40) to move between a lowered position in which the strip lies substantially extending the remainder of the carriage and a raised position in which the second strip extends transversely towards the ceiling of the device.

12. Device according to claim 11, wherein the strip (53) is shaped as a suction bar.

13. Device according to any preceding claim, wherein the opener includes two suction bars (23, 24) arranged one above the other and between which the end of the first sheath is to be inserted.

14. Device according to claim 13, wherein each of the two suction bars (23, 24) is movably mounted relative to a frame of the device to move between:
- a closing position in which the two bars are arranged so that the suction holes in one of the bars face the suction holes in the other bar; and
- a blocking position in which the two bars are arranged so that the suction holes of both of the bars are oriented towards the outside of the blocker.

15. Device according to claim 14, wherein at least one of the bars is also mounted to move relative to the frame (10) with additional movement so as to be movable between:
- a spaced-apart position in which said bar is offset from the other bar; and
- the standby position in which the two suction bars are placed one against the other.

16. Device according to any preceding claim, further including a cutter appliance (30) for preparing the end of the first sheath, the cutter appliance including snap-fastener means suitable for co-operating with corresponding snap-fastener means of a frame of the device.

17. Device according to claim 16, wherein the cutter appliance (30) includes a slot (35) and a movable blade that is movable relative to said slot, the slot being arranged in such a manner as to present a rectilinear central portion that is extended at both ends by symmetrical steps.

18. Device according to any preceding claim, wherein a frame (10) of the device includes a magazine (12) for storing reels, the magazine having drawers (14a, 14b, 14c, 14d) mounted to slide relative to the frame and each carrying one reel.
of

19. Method of connecting together two flat tubular sheaths, the method comprising the following successive steps:
- blocking one end of a first sheath;
- opening the end of the first sheath;
the method being **characterized in that** it comprises the following successive steps:
- applying adhesive to the inside of the end of the first sheath; and
- closing the end of the first sheath on an end of the second sheath.
